# EUROPÄISCHE PATENTSCHRIFT

(11) **EP 0 816 061 B1**
(45) Veröffentlichungstag und Bekanntmachung des Hinweises auf die Patenterteilung: **02.05.2003**
(21) Anmeldenummer: 97110752.9
(22) Anmeldetag: 01.07.1997
(51) Int. Cl.: B32B 5/26, B32B 5/28, B32B 27/08, B32B 27/06, B64G 1/22

(54) **CFK-Trennlaminat**
CFC separating laminate
CFC-produit séparatrice multicouche

(30) Priorität: 04.07.1996 DE 19626921
(43) Veröffentlichungstag der Anmeldung: 07.01.1998
(73) Patentinhaber: Astrium GmbH, 81663 München (DE)
(72) Erfinder: Pritzer, Wolfgang, Dipl.-Ing., 88718 Daisendorf (DE); Bizer, Dietrich, Madison, NJ 07940 (US)
(74) Vertreter: Meel, Thomas

(56) Entgegenhaltungen:
- EP-A- 0 672 517
- DE-A- 3 004 905
- DE-A- 19 534 627
- GB-A- 2 249 050
- US-A- 5 567 535

## Beschreibung

Strukturteile von Raumfahrt-Transportsystemen werden durch pyrotechnische Trennsysteme getrennt. Aus Gewichtsgründen und Kostengründen ist es vorteilhaft, solche Trennsysteme in CFK-Bauweise herzustellen anstelle der bisherigen Aluminiumbauweise.

Aufgabe der Erfindung ist es, ein ausreichend tragfähiges CFK-Laminat her zustellen, das an einer vorbestimmten Stelle bricht, ein genau vorausbestimmbares und prüfbares Bruchverhalten aufweist und daß der Bruch ohne Entstehung von losen Partikeln erfolgt.

Diese Aufgabe wird durch den Gegenstand des Patentanspruchs gelöst.

Das erfindungsgemäße Trennlaminat ist so aus mehreren CFK-Prepreglagen aufgebaut , daß jede Lage im Bereich der Sollbruchstelle getrennt ist und diese Trennstellen so gegeneinander versetzt sind, daß von Lage zu Lage eine Überlappung bestimmter Länge entsteht. Das Trennlaminat kann aus mehreren unidirektionalen CFK-Prepreglagen aufgebaut sein.

Die Erfindung wird nachfolgend anhand von Figuren näher erläutert.

### Es zeigen:

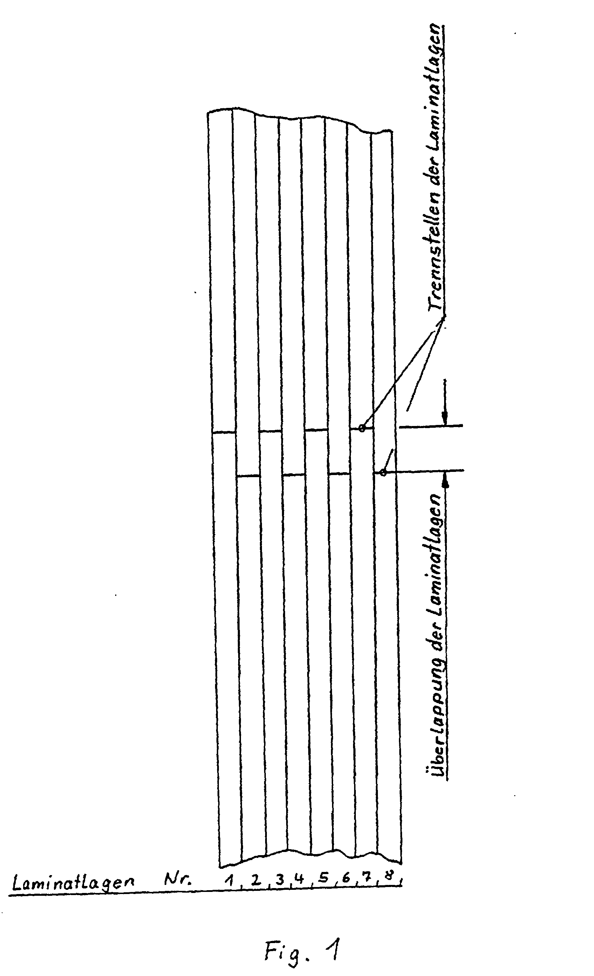

- Fig. 1: die schematische Darstellung eines Trennlaminats in Seitenansicht,

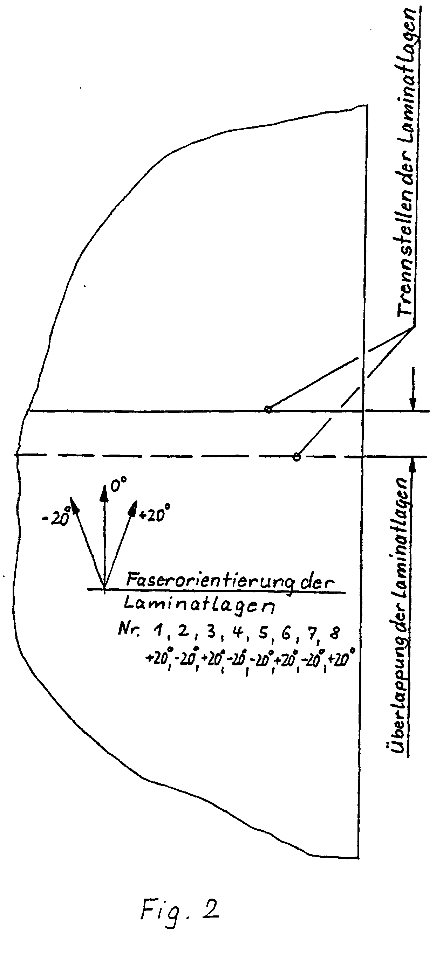

- Fig. 2: die schematische Darstellung eines Trennlaminats in Draufsicht,

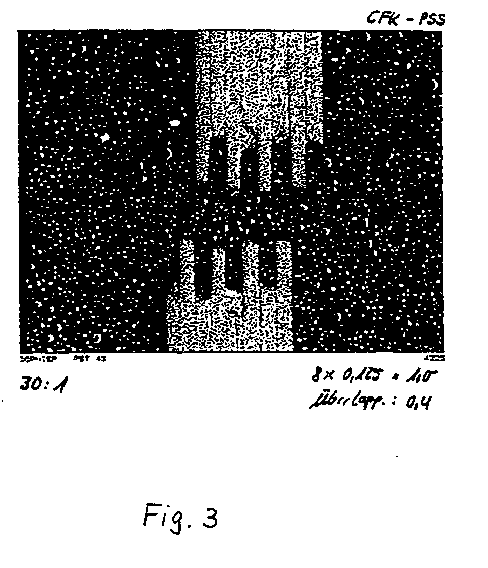

- Fig. 3: den Querschnitt eines im Zugversuch getrennten Trennlaminats und
- Fig. 4: die schematische Darstellung des Versuchsaufbaus für einen Querschlag Bruchversuch.

Im Zugversuch nach DIN 29971 bei Raumtemperatur wurde die Zugfestigkeit eines erfindungsgemäßen Trennlaminats ermittelt und das Bruchverhalten, bezüglich der Partikelemission, untersucht.

### Trennlaminat:

- 8 Lagen CFK-UD Prepregs, 0,125 dick = 1,0 mm Laminatdicke
- Material: HTA / VICOTEX 6376
- Lagenaufbau: +20°, -20°, +20°, -20°, -20°, +20°, -20°, +20°
- Überlappung: 0,4 mm

### Testergebnisse Zugprüfung aus 6 Prüfkörpern:

- Zugbruchfestigkeit: 242 N/mm² Mittelwert
- Bruchverhalten: Es erfolgte ein glatter Bruch an den Lagenstoßstellen und an den Überlappungsbrücken, ohne daß lose Partikel entstanden.

Im Druckversuch nach DIN 29971 bei Raumtemperatur wurde an einem Trennlaminat von gleicher Beschaffenheit aber doppelter Dicke die Druckbruchfestigkeit ermittelt.

### Testergebnisse Druckprüfung aus 6 Prüfkörpern:

- Druckbruchfestigkeit: 442 N/mm² Mittelwert.

### Querschlag Bruchversuch:

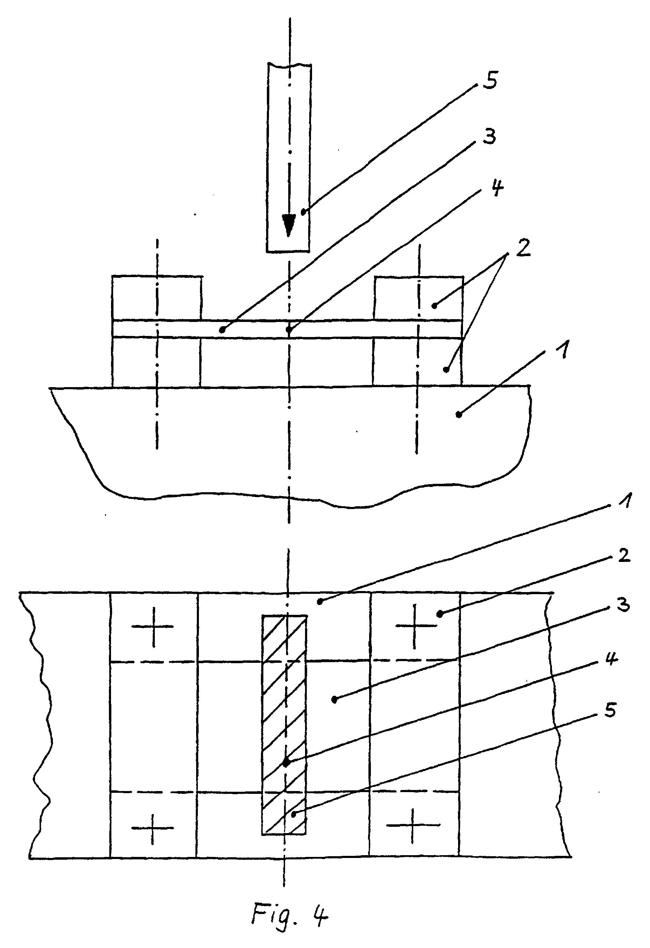

Zur Simulation der Beanspruchung eines Trennlaminats bei der pyrotechnischen Trennung werden Trennlaminate beidseitig eingespannt und an der Trennstelle durch das Aufprallen eines Fallgewichts beansprucht. Fig. 4 zeigt den Versuchsaufbau in schematischer Darstellung mit folgenden Bezugszeichen: 1 Auflage, 2 Einspannung des Trennlaminates, 3 Trennlaminat, 4 Sollbruchstelle, 5 Fallgewicht.

### Versuchsergebnisse:

Die geprüften Laminate, der oben beschriebenen Art, wurden an der Sollbruchstelle getrennt. Es erfolgte ein glatter Bruch wie beim Zugversuch, ohne daß lose Partikel entstanden.

| **Erläuterungen, Abkürzungen, Einheiten:** | | |
|---|---|---|
| CFK deutsch | Kohlefaser verstärkter Kunststoff | |
| englisch | Carbonfibres Reinforced Plastic (CFRP) | |
| | | |
| CFK-UD Prepregs | Vorgefertigte ungehärtete Schichten von mit Kunstharz getränkten Kohlefasern, die zueinander parallel angeordnet sind (unidirektional). | |
| | | |
| HTA*l*VICOTEX | Materialbezeichnung des Herstellers Fa. Ciba Geigy | |
| DIN 29971 | Deutsche Norm 29971 betreffend Luft- und Raumfahrt, Technische Lieferbedingung für Unidirektionalgelege-Prepreg aus Kohlenstoffasern und Epoxidharz | |
| | | |
| Druck, mechanische Spannung | N/mm² | Newton pro Quadratmillimeter |
| Pressure, mechanical tension | N/mm² | Newton per square millimeter |

## Patentansprüche

1. Sollbruchstelle für Strukturteile von Raumfahrt-Transportsystemen, wobei das Strukturteil aus einem CFK-Laminat besteht, **dadurch gekennzeichnet, daß** das Laminat aus mehreren gemeinsam ausgehärteten CFK-Prepreg-Lagen besteht und jede Lage im Bereich der Sollbruchstelle getrennt ist und die Trennstellen so gegeneinander versetzt angeordnet sind, daß eine Überlappung der Lagen vorhanden ist.

## Claims

1. Predetermined breaking site for structural parts of space travel transportation systems, the structural part consisting of a CFRP laminate, **characterized in that** the laminate consists of a plurality of jointly cured CFRP prepreg plies and each ply has been separated in the region of the predetermined breaking site and the separation sites are arranged with mutual offset in such a way that the plies overlap.

## Revendications

1. Emplacement destiné à la rupture pour pièces structurelles de systèmes de transport spatial, la pièce structurelle étant constituée d'un stratifié de CFRP, **caractérisé en ce que** le stratifié est constitué de plusieurs couches de CFRP préimprégnées durcies ensemble, et **en ce que** chaque couche est séparée dans la région de l'emplacement destiné à la rupture, les emplacements de séparation étant disposés en décalage mutuel de telle sorte que les couches se superposent.
